# EUROPÄISCHE PATENTSCHRIFT

(11) **EP 3 583 877 B1**
(45) Veröffentlichungstag und Bekanntmachung des Hinweises auf die Patenterteilung: **29.07.2020**
(21) Anmeldenummer: 19178477.6
(22) Anmeldetag: 05.06.2019
(51) Int. Cl.: A47J 31/54, A47J 31/56

(54) **HEISSGETRÄNKEZUBEREITUNGSVORRICHTUNG MIT DURCHLAUFERHITZER**
HOT BEVERAGE PREPARATION DEVICE WITH CONTINUOUS FLOW HEATER
DISPOSITIF DE PRÉPARATION DE BOISSONS CHAUDES POURVU DE CHAUFFE-EAU INSTANTANÉ

(30) Priorität: 18.06.2018 DE 102018114576
(43) Veröffentlichungstag der Anmeldung: 25.12.2019
(73) Patentinhaber: FRANKE Kaffeemaschinen AG, 4663 Aarburg (CH)
(72) Erfinder: Mueller, Simon, 5037 Muhen (CH); Waechter, Serge, 4052 Basel (CH)
(74) Vertreter: Lemcke, Brommer & Partner Patentanwälte Partnerschaft mbB

(56) Entgegenhaltungen:
- EP-A1- 2 612 577
- WO-A1-2013/189869
- WO-A1-2014/170205
- DE-A1-102010 002 440

## Beschreibung

Die vorliegende Erfindung betrifft eine Vorrichtung zum Zubereiten frisch gebrühter Heißgetränke, mit mindestens einem Heißwassererzeuger und mit einer Brühvorrichtung, der Heißwasser aus dem Heißwassererzeuger zuführbar ist, wobei es sich bei dem Heißwassererzeuger um einen Durchlauferhitzer handelt.

Im Stand der Technik sind Kaffeevollautomaten bekannt, welche auf Knopfdruck portionsweise frischgebrühte Kaffeegetränke zubereiten. Das hierfür erforderliche Heißwasser wird üblicherweise in einem Heißwasserboiler vorgehalten, sodass eine lange Aufheizzeit entfällt. Vereinzelt wurden auch Kaffeemaschinen vorgeschlagen, bei denen Wasser zum Zeitpunkt des Getränkebezugs mit einem Durchlauferhitzer erhitzt wird. So zeigt die Schrift DE 10 2008 028 031 A1 eine Kaffeemaschine für Kaffeekapseln, bei der Wasser mit einem Durchlauferhitzer erhitzt wird.

Bekannt ist auch, dass bei Kaffeevollautomaten von Zeit zu Zeit eine Entkalkung des Heißwassererzeugers durchgeführt werden muss. Hierzu sind beispielsweise Lösungen bekannt wie in der WO 2013/023963 A1 oder der EP 2705784 A1, bei denen eine Kartusche mit einem wasserlöslichen Entkalkungsmittel eingesetzt bzw. an die Vorrichtung angeschlossen wird, um einen Entkalkungsvorgang durchzuführen. Bei der CH 709738 wird an die Kaffeemaschine eine Entkalkungsmittel-Applikationsvorrichtung mit einer in einem Behälter mit veränderlichem Volumen aufgenommenen Entkalkungslösung angeschlossen.

Die WO 2014/170205 A1 offenbart eine Vorrichtung zum Zubereiten frisch gebrühter Heißgetränke, mit einem Heißwassererzeuger und mit einer Brühvorrichtung, der Heißwasser aus dem Heißwassererzeuger zuführbar ist, wobei es sich bei dem Heißwassererzeuger um einen Durchlauferhitzer handelt, wobei eine Steuerung zur Ansteuerung des Durchlauferhitzers derart ausgebildet ist, dass der Durchlauferhitzer zum Bezug einer vorgegebenen Heißwassermenge angeschaltet, und bereits kurz vor vollständiger Ausgabe der Heißwassermenge ab-geschaltet wird, so dass die Temperatur des Heißwassers am Ausgang des Durchlauferhitzers zum Bezugsende rückläufig ist (siehe Seite 3, Zeilen 23 - 26). Nachteilig an der Verwendung eines Durchlauferhitzers zur Bereitstellung von Heißwasser ist eine üblicherweise lange Aufwärmzeit und die, vor allem wenn mit hoher Heizleistung für ein schnelles Aufheizen gearbeitet wird, starke Verkalkungsneigung.

Die vorliegende Erfindung hat sich zur Aufgabe gesetzt, eine Heißgetränkezubereitungsvorrichtung mit Durchlauferhitzer anzugeben, bei der der Durchlauferhitzer weniger schnell verkalkt.

Die Aufgabe wird gelöst durch die Merkmale des Anspruchs 1. Vorteilhafte Ausgestaltungen sind den abhängigen Ansprüchen zu entnehmen. Ein entsprechendes Verfahren zum Zubereiten frisch gebrühter Heißgetränke wird in Anspruch 8 angegeben.

Die Erfindung basiert auf der Erkenntnis, dass im Durchlauferhitzer verbleibendes Heißwasser, vor allem wenn dieses nach dem Ende eines Getränkebezugs steht, einen maßgeblichen Anteil an der Verkalkung des Durchlauferhitzers hat. Daher sieht die Erfindung Maßnahmen vor, um den Durchlauferhitzer nach einem Getränkebezug möglichst rasch herunter zu kühlen. Die Ansteuerung des Durchlauferhitzers erfolgt über eine Steuerung. Diese ist erfindungsgemäß so ausgebildet, dass sie den Durchlauferhitzer zum Bezug einer vorgegebenen Heißwassermenge anschaltet aber bereits kurz vor vollständiger Ausgabe der Heißwassermenge wieder abschaltet. Die Temperatur des Heißwassers am Ausgang des Durchlauferhitzers ist somit zum Bezugsende bereits rückläufig. Wird nach Bezugsende der Wasserfluss gestoppt, so hat das im Durchlauferhitzer und den nachfolgenden Leitungen verbleibende Restwasser also eine geringere Temperatur als während der Getränkezubereitung zuvor, so dass weniger Kalk aus dem Wasser abgeschieden wird.

Außerdem ist ein in Durchflussrichtung hinter dem Durchlauferhitzer angeordnetes, als steuerbares Wegeventil ausgebildetes Drainageventil vorgesehen, über das durch den Durchlauferhitzer strömendes Wasser statt in Richtung der Brühvorrichtung direkt in eine Abwasserleitung oder einen Abwassersammelbehälter geleitet werden kann. Darüber hinaus ist zwischen Durchlauferhitzer und Brühvorrichtung ein Wegeventil vorgesehen. Zur weiteren Nachkühlung des Durchlauferhitzers ist die Steuerung ausgebildet nach Ende eines Heißwasserbezugs das Wegeventil zu schließen, das Drainageventil zu öffnen, und bei ausgeschaltetem Durchlauferhitzer nochmals einen Wasserfluss durch den Durchlauferhitzer zu aktivieren.

Zweckmäßigerweise kann das Drainageventil während einer Aufwärmphase des Durchlauferhitzers geöffnet und das vom Durchlauferhitzer kommende Wasser in die Abwasserleitung oder den Abwassersammelbehälter geleitet werden. Diese Aufwärmphase wird vorzugsweise bei jedem Bezug eines Heißgetränks ausgeführt, d.h. der Durchlauferhitzer wird nur während eines Produktbezugs betrieben und danach abgestellt.

Das Abschalten der Heizung erfolgt vorzugsweise nachdem zwischen 85% und 95% des für die Getränkezubereitung vorgegeben Wasservolumens durch den Durchlauferhitzer geströmt sind. Die Volumenbestimmung erfolgt hierbei mittels eines in der Zuleitung befindlichen Durchflussmessers. Das leichte Abkühlen der letzten 5% - 15 % der Wassermenge beeinträchtigt die Getränkequalität nach Ergebnissen der Erfinder nicht. Einerseits verbleibt zumindest ein wesentlicher Teil davon ohnehin als Restwasser in den Leitungen zwischen Durchlauferhitzer und Auslass und wird anschließend in den Abfluss abgelassen oder ausgeblasen. Der geringe Anteil von wenigen % an geringfügig kälterem "Heißwasser" ist für einen Verbraucher weder an der Temperatur des fertigen Getränks noch an dessen Geschmack feststellbar. Die wesentlichen wassergängigen Bestandteile des aufzubrühenden Materials - z.B. Kaffeemehl oder Teeblätter - wurden bereits von dem vor Ausschalten der Heizung durchgelaufenen Heißwasser aufgenommen, so dass die letzten 5% -10% der Wassermenge kaum mehr Einfluss auf die im fertigen Getränk enthaltenen Inhaltsstoffe haben.

Im Rahmen der vorliegenden Erfindung dient als Durchlauferhitzer bevorzugt eine Heizpatrone, die einen zylindrischen Innenkörper und einen diesen umgebenden äußeren Mantel aufweist und bei der zwischen der Mantelfläche des Innenkörpers und der Innenseite des Mantels ein wendelförmig verlaufender Strömungskanal für zu erhitzendes Wasser ausgebildet ist. Eine solche Heizpatrone ist besonders kompakte und ermöglicht durch geringe thermische Masse ein besonders schnelles Aufheizen.

Die elektrische Heizung ist bei dieser Bauform als Heizwendel ausgebildet, der innerhalb des zylindrischen Innenkörpers wendelförmig um dessen Mittelachse verläuft. Insbesondere können die Heizwendel um einen axial angeordneten hitzebeständigen Kern, beispielsweise einen Keramikkern, gewunden sein. Der Zwischenraum zwischen den Heizwendeln und der Außenhaut des Innenkörpers kann mit einem pulverförmigen Material, welches einerseits elektrisch isoliert, anderseits wärmeleitend ist, wie etwa Magnesiumoxid oder ein anderes Oxidpulver verfüllt sein.

Um eine möglichst konstante Durchflussrate zu gewährleisten kann außerdem eine Wasserpumpe vorgesehen werden, die Wasser aus einer Trinkwasserzuleitung zu dem Durchlauferhitzer fördert. Hierbei kann auch die Pumpleistung der Wasserpumpe regelbar sein bzw. über die Steuerung regelbar sein. Die Aktivierung eines Wasserflusses durch den Durchlauferhitzer erfolgt somit durch Anschalten der Pumpe (eines der Wegeventile stromabwärts der Pumpe ist normalerweise stets geöffnet).

Weitere Vorteile und Eigenschaften der vorliegenden Erfindung ergeben sich aus der nachfolgenden Beschreibung eines Ausführungsbeispieles anhand der Figuren. Hierbei zeigt
- Figur 1: ein Wasserflussschema eines Getränkevollautomaten mit zwei Durchlauferhitzern und einem integrierten Entkalkungssystem zum automatischen Entkalken der Durchlauferhitzer,
- Figur 2: eine Schnittzeichnung eines im Rahmen der Erfindung eingesetzten Durchlauferhitzers,
- Figur 3: ein Messdiagramm des zeitlichen Verlaufs von Durchflussmenge und Wassertemperatur während eines Getränkebezugs,
- Figur 4: ein weiteres Messdiagramm, in dem der Temperaturverlauf größer dargestellt ist und
- Figur 5: einen Schnitt durch einen Durchlauferhitzer in einem zweiten Ausführungsbeispiel.

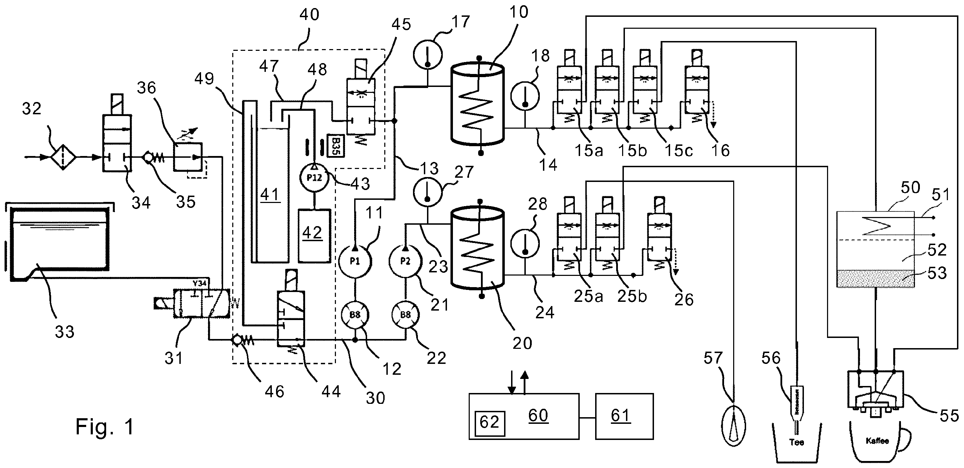

In Figur 1 ist in einem sogenannten Wasserlaufschema der Aufbau einer Vorrichtung zum Zubereiten von Heißgetränken gezeigt, wie er etwa bei einem Kaffeevollautomaten zum Einsatz kommt. Zur Erzeugung von Heißwasser, mit dem Heißgetränke zubereitet werden, dient ein Durchlauferhitzer 10. In Wasserflussrichtung stromaufwärts des Durchlauferhitzers 10 befinden sich eine Wasserpumpe 11 und ein Durchflussmesser 12, die über eine Leitung 13 mit dem Durchlauferhitzer 10 verbunden sind. Am Heißwasserausgang des Durchlauferhitzers 10 sind über eine Leitung 14 mehrere Wegeventile 15a, 15b, 15c und 16 angeschlossen. Am Eingang und am Ausgang des Durchlauferhitzers 10 sind außerdem je ein Temperaturfühler 17, 18 angeordnet.

Zusätzlich zu dem für die Zubereitung von Heißwasser vorgesehenen Durchlauferhitzer 10 besitzt die Vorrichtung einen zweiten Durchlauferhitzer 20, der zur Erzeugung von Dampf dient, der ebenfalls zur Zubereitung von Heißgetränken, beispielsweise zur Nacherwärmung oder zum Aufschäumen von Milch oder anderen Getränken dienen kann und hier nicht weiter interessiert. Auch der zweite Durchlauferhitzer 20, der hier zur Erzeugung von Dampf dient, wird er im Sinne der vorliegenden Erfindung ebenfalls als Heißwassererzeuger im weiteren Sinne verstanden.

Stromaufwärts des zweiten Durchlauferhitzers 20 befinden sich ebenfalls eine Wasserpumpe 21 und ein Durchflussmesser 22, die über eine Leitung 23 mit dem Zulauf des Durchlauferhitzers 20 verbunden sind. Am Heißwasser- bzw. Dampfausgang des Durchlauferhitzers 20 sind über eine Leitung 24 verschiedene Wegeventile 25a, 25b, 26 angeschlossen. Wir bei dem Durchlauferhitzer 10 sind auch am Eingang und am Ausgang des Durchlauferhitzers 20 je ein Temperaturfühler 27, 28 angeordnet, deren Funktion ebenfalls nachfolgend erläutert wird.

Die beiden Durchflussmesser 12, 22 sind im Ausführungsbeispiel jeweils vor den zugehörigen Pumpen 11, 21 angeordnet. Es wäre jedoch in gleicher Weise möglich, die Durchflussmesser 12, 22 in Flussrichtung hinter den zugehörigen Wasserpumpen 11, 21 anzuordnen. Saugseitig sind die beiden Wasserpumpen 11, 21 über eine Trinkwasserzuleitung 30 und ein optionales Umschaltventil 31 mit einem Trinkwasseranschluss 32 des öffentlichen Leitungsnetzes oder einem an oder in dem Gerät vorgesehenen Wassertank 33 verbunden. Im Falle eines Anschlusses an ein öffentliches Leitungsnetz 32 sind in der Zuleitung ein Absperrventil 34, ein Rückschlagventil 35 sowie ein Druckminderer 36 vorgesehen.

Die Wasserpumpe 11 fördert Trinkwasser aus der angeschlossenen Trinkwasserzuleitung 30 über die Leitung 13 zu dem Durchlauferhitzer 10, von wo aus das Heißwasser über das Wegeventil 15b zu einer Brühgruppe 50 gefördert werden kann. Die Brühgruppe 50 umfasst in an sich bekannter Weise eine Heizung 51, mit der das zugeführte Heißwasser zum Sieden gebracht oder die Brühgruppe vorgewärmt werden kann, und eine Brühkammer 52, in die portioniertes, frisch gemahlenes Kaffeepulver 53 eingefüllt wird. Eine Brühgruppe, die im Rahmen der vorliegenden Erfindung eingesetzt werden kann, ist beispielsweise in der EP 2561778 A1 beschrieben, auf die, um unnötige Wiederholungen zu vermeiden, hiermit vollinhaltlich Bezug genommen wird.

Die Brühgruppe 50 ist so ausgestaltet, dass sie geöffnet werden kann, um eine portionierte Menge Kaffeepulver einzufüllen, welches zuvor in einer Mühle des Kaffeevollautomaten portionsweise frisch gemahlen wurde. Außerdem kann bei geöffneter Brühgruppe nach dem Brühvorgang der verbleibende Kaffeesatz in einen Tresterbehälter ausgeworfen werden. Die Brühgruppe weist außerdem einen beweglichen Kolben auf (nicht dargestellt), der das eingefüllte Kaffeepulver gegen ein in der Brühkammer befindliches Brühsieb verdichtet. Nach Zurückfahren des Kolbens kann das so verdichtete Kaffeepulver von dem unter dem Druck der Pumpe 11 stehenden Brühwasser aus dem Durchlauferhitzer 10 durchströmt werden. Der fertig gebrühte Kaffee wird von der Brühgruppe 50 über eine Auslassleitung zu einem Auslauf 55 für Kaffeegetränke geleitet. Über das Wegeventil 15a kann Heißwasser direkt zu dem Auslauf 55 geleitet werden, beispielsweise zu Reinigungszwecken oder zum Zubereiten von Instantgetränken. Außerdem kann Heißwasser über das Wegeventil 15c auch zu einem separaten Heißwasserauslass 56 geleitet werden, der beispielsweise zur Zubereitung von Tee dient.

Anstatt einer wie hier gezeigten Brühgruppe 50 kann auch eine Brühvorrichtung zum Einsatz kommen, die zur Aufnahme sogenannter Kaffeekapseln oder Kaffeepads ausgebildet ist.

Von dem zweiten Durchlauferhitzer 20 erzeugter Dampf kann über das Wegeventil 25a entweder zu einer sogenannten Dampflanze 57 geleitet werden, um beispielsweise Milch aufzuschäumen, außerdem kann Dampf über das Wegeventil 25b auch zu dem Auslauf 55 geleitet werden, um zum Beispiel über eine separate Leitung (nicht gezeigt) zugeleitete Milch zu erwärmen oder aufzuschäumen.

Als Wegeventile ausgebildete Drainageventile 16 und 26 dienen dazu, den Heißwasserausgang des Durchlauferhitzers 10 bzw. des Durchlauferhitzers 20 mit einer sogenannten Drainage, also einer Abwasserleitung oder einem Abwassersammelbehälter für Abwasser zu verbinden. Dies ist unter anderem zum Zwecke einer Entkalkung des zugehörigen Durchlauferhitzers 10, 20 notwendig, um die durch die Durchlauferhitzer 10, 20 geleitete Entkalkerlösung abzuleiten.

Daneben dienen die beiden Drainageventile 16, 26 aber auch dazu, in einer Aufwärmphase des zugehörigen Durchlauferhitzers 10, 20 das durchströmende Wasser in die Abwasserleitung oder den Abwassersammelbehälter zu leiten. Somit wird sichergestellt, dass erhitztes Wasser bzw. Wasserdampf erst nach Erreichen einer vorgebbaren Mindesttemperatur in Richtung des zugehörigen Auslasses geleitet werden. Hingegen wird Wasser, dass während des Aufheizvorgangs noch nicht heiß genug ist, in zum Abwasser abgeleitet wird, also nicht zu einem der Auslässe 55, 56, 57 gelangen kann.

Der im Ausführungsbeispiel gezeigte Heißgetränkeautomat besitzt außerdem optional ein integriertes Entkalkungssystem 40. Das Entkalkungssystem 40 umfasst einen Mischbehälter 41, einen Vorratsbehälter 42 für flüssiges Entkalkerkonzentrat und eine Dosierpumpe 43. Die saugseitig der Wasserpumpen 11, 21 befindliche gemeinsame Trinkwasserzuleitung 30 kann über einen Umschaltventil 44 mit einer bis zum Boden des Mischbehälters 41 reichenden Ansaugleitung 49 verbunden werden, um zum Zwecke einer Entkalkung eine Entkalkungsmittellösung aus dem Mischbehälter 41 anzusaugen und zu den Durchlauferhitzern 10, 20 zu fördern. Zuvor wird die Entkalkungsmittellösung im Mischbehälter 41 angemischt, indem über die Dosierpumpe 43 eine dosierbare Menge des Entkalkerkonzentrats über die Zuleitung 48 in den Mischbehälter gefördert wird.

Über ein Wegeventil 45, welches mit der druckseitig an die Pumpe 11 angeschlossenen Zuleitung 13 verbunden ist, kann mittels der Wasserpumpe 11 Frischwasser über die Zuleitung 47 in den Mischbehälter eingefüllt werden. Die Menge des eingefüllten Frischwassers lässt sich hierbei mithilfe des Durchflussmessers 12 bestimmen, sodass das Ventil 45, nachdem eine vorbestimmte Wassermenge in den Mischbehälter 41 eingefüllt wurde, geschlossen werden kann.

Nachdem die Entkalkungsmittellösung im Mischbehälter 41 angemischt wurde, kann das über das Ventil 44 die Zuleitung 30 mit der Ansaugleitung 49 verbunden werden. Anschließend wird das Drainageventil 16 geöffnet und über die Wasserpumpe 11 die Entkalkungsmittellösung aus dem Mischbehälter 41 durch den Durchlauferhitzer 10 gefördert. Anschließend wird das Umschaltventil 44 wieder in die Betriebsstellung zurückgeschaltet, in der die Zuleitung 30 mit dem öffentlichen Wasseranschluss 32 oder dem Wassertank 33 verbunden ist und mittels der Wasserpumpe 11 der Durchlauferhitzer 10 nochmals mit Frischwasser durchgespült. Ein Rückschlagventil 46 verhindert, dass gegebenenfalls noch in der Zuleitung 30 befindliche Entkalkungsmittellösung in den Frischwassertank 33 zurückströmen kann. In gleicher Weise kann auch der Durchlauferhitzer 20 entkalkt und gereinigt werden, indem über die Wasserpumpe 21 Entkalkungsmittellösung aus dem Mischbehälter 41 durch den Durchlauferhitzer 20 und über das Drainageventil 26 in den Auslauf gefördert wird.

Auch wenn der Durchlauferhitzer 20 im vorliegenden Ausführungsbeispiel zur Erzeugung von Dampf dient, wird er im Sinne der vorliegenden Erfindung ebenfalls als Heißwassererzeuger im weiteren Sinne verstanden. Es ist offensichtlich, dass das Wegeventil 45 des Entkalkungssystems 40 statt über die Leitung 13 mit der Wasserpumpe 11 auch über die Leitung 23 mit der Wasserpumpe 21 verbunden sein kann.

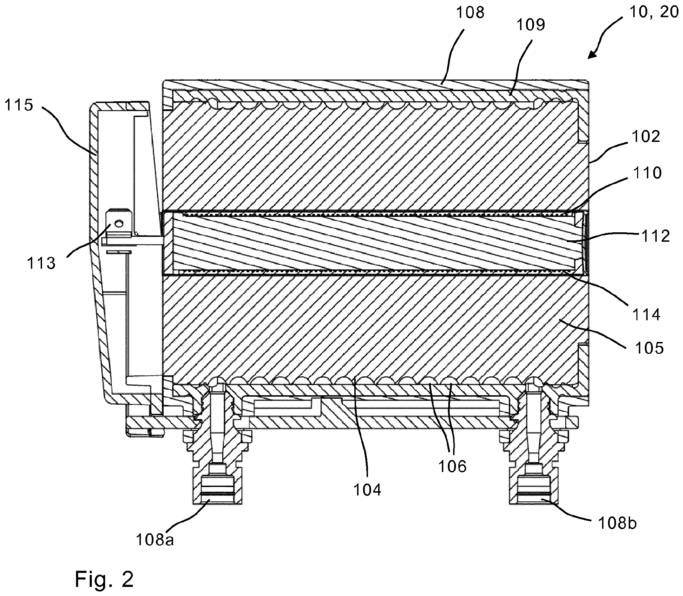

Bei den Durchlauferhitzern 10, 20, die im vorliegenden Ausführungsbeispiel zum Einsatz kommen, handelt es sich um kompakte Durchlauferhitzer in Form sogenannter Heizpatronen. Eine solche Heizpatrone ist in Figur 2 näher gezeigt. Sie besitzt einen dünnwandigen zylindrischen Innenkörper 102, dessen Mantelfläche 104 außenseitig mit einer wendelförmig verlaufenden Rippung bzw. wendelförmigen Nut 106 versehen ist, die nach außen hin von einem äußeren zylindrischen Mantel 108 begrenzt wird und so einen Strömungskanal für das zu erhitzende Leitungswasser bildet. Zwischen äußerem Mantel 108 und Innenkörper 102 kann sich optional noch eine Dichtung beispielsweise in Form einer elastischen Silikonhülle 109 befinden, die eine Leckströmung quer zum wendelförmigen Strömungskanal 106 verhindert.

Im Inneren des Innenkörpers befindet sich eine Heizeinheit 110, welche einen Kern 112 aus hitzebeständigem Material, beispielsweise Keramik, und um den Kern 112 gewundene elektrische Heizdrähte 114 umfasst. Der Zwischenraum zwischen der Außenhaut des Innenkörpers und der Heizeinheit 110 ist mit einem elektrisch isolierenden Material 105 befüllt, insbesondere mit einem verdichteten, pulverförmigen Material 105. Vorliegend ist der Zwischenraum mit Magnesiumoxid ausgefüllt.

An einer Stirnseite des Durchlauferhitzers 10, 20 sind elektrische Anschlüsse 113 der Heizeinheit 110 angeordnet, von denen in dem gezeigten Schnitt nur einer zu erkennen ist. Eine stirnseitige Schutzkappe 115 verdeckt und schützt die elektrischen Anschlüsse 113 vor versehentlicher Berührung.

An der Außenhülle 108 sind die Anschlüsse 108a, 108b angebracht, die mit den Zu- und Ableitungen für das zu erwärmende Wasser verbunden werden.

Der zylindrische Innenkörper 102 kann aus lebensmitteltauglichem Edelstahl hergestellt werden. Die Außenhülle 108 besteht bevorzugt aus einem hitzebeständigen Kunststoff oder ebenfalls aus Edelstahl. Statt in der Mantelfläche 104 des Innenkörpers kann der wendelförmige Strömungskanal auch an der Innenfläche der Außenhülle 108 ausformt sein. Die Mantelfläche 104 des Innenkörpers 102 kann in diesem Fall glatt, also nicht gerippt ausgeführt sein.

Der im Ausführungsbeispiel beschriebene Kaffeevollautomat besitzt außerdem eine programmierbare Steuerung 60 mit einem Prozessor 62 und eine mit der Steuerung 60 verbundene Benutzerschnittstelle 61, beispielsweise in Form eines berührungsempfindlichen Displays oder einer anderweitigen Anzeige- und Eingabeeinheit. Über die Steuerung 60 werden die Funktionen der Wasserpumpen 11, 21, sämtlicher Wegeventile, die Heizungen 114a, 114b der Durchlauferhitzer 10, 20 sowie des optionalen Entkalkungssystems 40 und dessen Dosierpumpe 43 angesteuert. Die Steuerung liest auch die Messwerte von den Durchflussmessern 12, 22 und den Temperatursensoren 17, 18, 27, 28 aus. Über die Steuerung 60 kann somit sowohl im normalen Betrieb die Zubereitung von Kaffeegetränken oder anderen Heißgetränken gesteuert werden, als auch eine Entkalkung der Durchlauferhitzer 10, 20 mittels des Entkalkungssystems 40 durchgeführt werden. Eine entsprechende Steuerschaltung 60 kann in an sich bekannter Weise unter Verwendung eines programmierbaren Prozessors 62 implementiert werden.

Die mittels der Steuerung 60 lässt sich eine zweistufige Regelung der Heißwassertemperatur realisieren. In einer sogenannten Feed-Forward-Regelung werden Eingangstemperatur und die Flussmenge erfasst und die elektrische Heizleistung wird unter Ausnutzung der bekannten Wärmekapazität von Wasser voreingestellt. In einer zusätzlichen Feinregelung wird die Ausgangstemperatur gemessen und die Heizleistung entsprechend nachreguliert (Feedback-Regelung). Durch die Feed-Forward-Regelung wird die Durchlaufzeit als Regelverzögerung umgangen, die Solltemperatur wird schneller erreicht. Die zusätzliche Nachregelung anhand der Ist-Temperatur erreicht eine noch genauere Regelung der Ausgangstemperatur und vermeidet außerdem herstellungsbedingte Temperaturunterschiede zwischen unterschiedlichen Durchlauferhitzern einer Serie. Die über die Feed-Forward-Regelung grob voreingestellte Temperatur kann etwas unter der gewünschten Soll-Temperatur liegen, so dass dann über die zweite Regelstufe, die Feedback-Regelung anhand der gemessenen der Ist-Temperatur, die Differenz zur gewünschten Soll-Temperatur überwunden wird.

Der Durchlauferhitzer 10 wird für jeden einzelnen Getränkebezug aufgewärmt und im Anschluss wieder abgekühlt. Im Betrieb erfolgt zunächst eine Aufwärmphase 126, 126' des Durchlauferhitzers 10. Das Drainageventil 16 ist in dieser Zeit geöffnet. Das Abstellen der Heizung 114 des Durchlauferhitzers 10 erfolgt bereit vor Ende eines Heißwasserbezugs, so dass die Wassertemperatur zum Ende hin bereits leicht sinkt. Nach Ende des Heißwasserbezugs wird das Drainageventil 16 nochmals geöffnet und der Durchlauferhitzer bei ausgeschalteter Heizung 114 nachgekühlt. Durch die schnelle Senkung der Temperatur im Durchlauferhitzer 10 wird somit die Verkalkung vermindert.

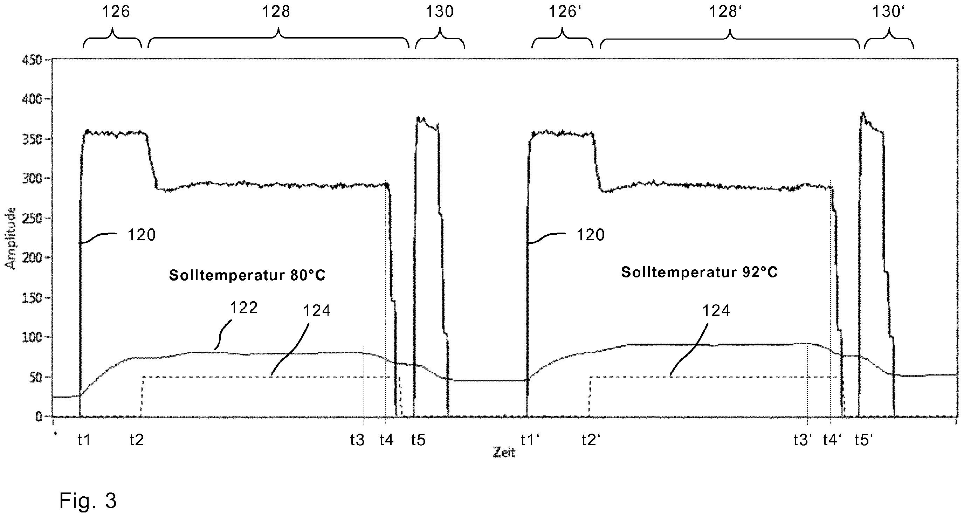

In Figur 3 sind der zeitliche Verlauf der Durchflussrate, Temperaturverlauf sowie der Schaltzustand des Drainageventils 16 gezeigt. Das Drainageventil 16 ist hierbei als stromlos geöffnetes Magnetventil ausgebildet. Die mit Bezugszeichen 120 gekennzeichnete Messkurve gibt den Verlauf der vom Durchflussmesser 12 gemessenen Durchflussrate an. Die "Amplitude" ist in der Einheit ml/min angegeben. Die Messkurve 122 ist die am Ausgang des Durchlauferhitzers 10 von dem Temperaturfühler 18 gemessene Temperaturkurve. Die Signalkurve 124 gibt den Spulenstrom für das Drainageventil 16 an.

Zu Beginn eines Produktbezugs wird die Wasserpumpe 11 angeschaltet und pumpt Wasser aus der Zuleitung 30 in Richtung des Durchlauferhitzers 10. Da das Drainageventil 16 stromlos, also geöffnet ist, fließt das Wasser von dem Durchlauferhitzer 10 kommend über die Leitung 14 in den Abfluss. Die Ventile 15a, 15b und 15c sind dabei geschlossen. Es stellt sich ein Durchfluss von etwa 330 ml/min ein. Gleichzeitig wird zum Zeitpunkt t1 die Heizung 114 des Durchlauferhitzers 10 angeschaltet. Die Aufwärmphase 126 des Durchlauferhitzers beginnt. Die Temperatur 122 steigt in dieser Phase an bis zu einer eingestellten Solltemperatur, die für den ersten Produktbezug 80°C beträgt.

Zu dem Zeitpunkt t2 ist die Solltemperatur erreicht. Nun wird das Drainageventil 16 geschlossen (Spulenstrom an) und das Ventil 15b geöffnet, so dass das nun genügend heiße Wasser nicht mehr zum Abfluss, sondern zur Brühgruppe 50 geleitet wird. Es beginnt die Phase 128 der Zubereitung eines Kaffeegetränks, welches am Auslauf 55 ausgegeben wird. Durch das Schließen des Drainageventils 16 und Öffnen des Ventils 15b steigt der Strömungswiderstand an, da das erhitzte Wasser nun nicht mehr direkt zum Abfluss gelangt, sondern durch die Brühkammer 50 geleitet wird. Aus diesem Grund sinkt die Durchflussrate etwas auf etwa 300 ml/min. Die Wassertemperatur 102 wird durch Regelung der Heizleistung des Durchlauferhitzers 10 im Rahmen der Regelgenauigkeit konstant gehalten.

Kurz vor Ende des Produktbezugs wird zu einem Zeitpunkt t3 die Heizung 114 des Durchlauferhitzers 10 abgeschaltet. Zu diesem Zeitpunkt sind bereits etwa 90% der vorgesehenen Wassermenge durch den Durchlauferhitzer geströmt und zum Auslass 55 ausgegeben. Beispielsweise kann die vorgegebene Wassermenge für einen Filterkaffee 125 ml betragen. Die Volumenbestimmung erfolgt mittels des Durchflussmessers 12, der von der Steuerung 60 ausgelesen wird. Die Steuerung 60 schaltet somit die Heizung 114 ab, nachdem etwa 112,5 ml Wasser durchgelaufen sind. Auf die genaue Einhaltung dieses Wertes kommt es nicht wesentlich an. Die Abschaltung der Heizung 114 kann z.B. bei einem Produktbezug von 125 ml grob im Bereich zwischen 105 ml und 120 ml erfolgen.

Die Wassertemperatur 122 am Ausgang des Durchlauferhitzers 10 beginnt nach Abschalten der Heizung 114 zu sinken. Es wird jedoch weiter Wasser durch den Durchlauferhitzer gefördert. Zu einem Zeitpunkt t4 danach - die Ausgangstemperatur ist zu diesem Zeitpunkt bereits um ca. 15°C gesunken - wird die Wasserpumpe 11 abgestellt. Die Durchflussrate sinkt rasch ab, bis der Wasserdruck im System abgebaut ist. Der Durchfluss durch den Durchlauferhitzer 10 kommt zum Erliegen und die Temperatur bleibt konstant, da der Durchlauferhitzer 10 nicht weiter durch das zugeführte Frischwasser gekühlt wird. Nun wird das Drainageventil 16 geöffnet (Spulenstrom aus). Das Ventil 15a zwischen Durchlauferhitzer 10 und Brühgruppe 50 wird geschlossen. Der Produktbezug 128 ist beendet.

Zum einen wiederum etwas späteren Zeitpunkt t5 wird die Wasserpumpe 11 nochmals kurz angestellt und fördert weiteres Frischwasser durch den Durchlauferhitzer 10, dessen Heizung 114 abgeschaltet ist bzw. bleibt. Durch die wiedereinsetzende Strömung von Kaltwasser wird der Durchlauferhitzer 10 weiter abgekühlt bis auf etwa 45°C, also eine Temperatur, bei der keine temperaturbedingte Kalkausscheidung mehr stattfindet. Die Wasserpumpe 11 wird angeschaltet, das Drainageventil 16 bleibt geöffnet, die Durchflussrate 120 fällt wieder bis zum Erliegen der Wasserströmung. Das Gerät ist für die Zubereitung eines weiteren Heißgetränks bereit.

In Figur 3 ist im Anschluss beispielhaft ein zweiter Produktbezug gezeigt. Dieser beginnt mit einer neuerlichen Aufwärmphase 126' zum Zeitpunkt t1' durch Anschalten der Heizung 114 und der Pumpe 11. Die Zieltemperatur beträgt diesmal 92°C, da für unterschiedliche Arten von Heißgetränken unterschiedliche Zieltemperaturen vorgegeben sein können. Mit dem Erreichen der Zieltemperatur ist die Aufwärmphase 126'abgeschlossen und mit dem Schließen des Drainageventils 16 (Spulenstrom an) und dem Öffnen des Ventils 15b beginnt eine neue Phase 128' des Produktbezugs. Kurz vor deren Ende wird zum Zeitpunkt t3' die Heizung 114 abgeschaltet; die Wassertemperatur 122 beginnt wieder zu sinken. Mit dem Deaktivieren der Pumpe zum Zeitpunkt t4' endet die Phase 128' des Produktbezugs. Das Drainageventil 16 wird wieder geöffnet, das Ventil 15b geschlossen. In der nachfolgenden Nachkühlphase 130' wird die Pumpe zum Zeitpunkt t5' nochmals aktiviert um den Durchlauferhitzer 10 nachzukühlen.

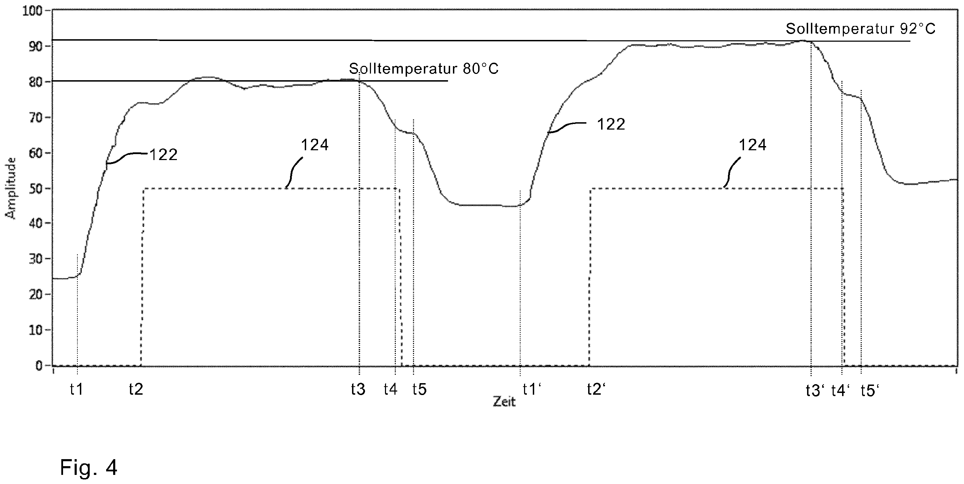

In Figur 4 ist derselbe Temperaturverlauf zum besseren Verständnis nochmals vergrößert gezeigt. Als "Amplitude" ist hierbei die Wassertemperatur am Ausgang des Durchlauferhitzers in °C angegeben.

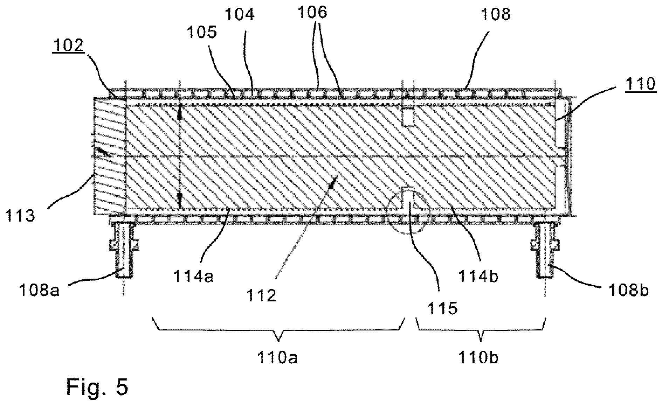

Ein zweites Ausführungsbeispiel für einen Durchlauferhitzer 10, 20 ist in Figur 5 gezeigt. Gleiche und gleichwirkende Teile sind hierbei mit gleichen Bezugszeichen versehen wir bei dem Durchlauferhitzer in Figur 2. Bei dem in Figur 5 gezeigten Durchlauferhitzer besitzt der Innenkörper 102 eine nicht gerippte, glatte Mantelfläche 104 aus Edelstahl. Der äußere Mantel 108 besteht ebenfalls aus Edelstahl und auf seiner dem Innenkörper 102 zugewandten Innenseite ist die wendelförmige Rippung 106 ausgebildet, so dass sich wie im ersten Ausführungsbeispiel auch ein wendelförmig zwischen Innenkörper 102 und äußerem Mantel 108 verlaufender Strömungskanal für das zu erhitzende Leitungswasser ergibt. Eine Dichtung zwischen Innenkörper 102 und äußerem Mantel 108 wird ist benötigt.

Der Keramikkörper 112 der Heizeinheit 110, um den die Heizwendel 114a, 114b verlaufen, hat einen größeren Umfang als im ersten Ausführungsbeispiel, so dass der verbleibende Ringspalt 105 zwischen dem Keramikkörper 112 und der dünnwandigen Edelstahlhülle 104 des Innenkörpers 102 wesentlich schmaler ausfällt. Der Ringspalt 105 ist zur elektrischen Isolation der Heizwendel 114a, 114b und zur thermischen Überbrückung des Ringspalts 105 wie im ersten Ausführungsbeispiel auch mit verdichtetem Magnesiumoxid ausgefüllt ist. Die beiden Heizbereiche 110a, 110b sind durch einen Spaltabstand, der durch eine Ringnut 115 im Außenumfang des Keramikkörpers 112 ausgebildet ist, zusätzlich thermisch und elektrisch getrennt. In der Figur angedeutet ist ebenfalls, dass die wendelförmig verlaufenden Heizdrähte 114a, 114b der beiden Heizbereiche 110a, 110b unterschiedlichen Querschnitt haben. Der Heizwendel 114a des ersten Heizbereichs 110a hat, da er für eine höhere elektrische Heizleistung ausgelegt ist, einen größeren Querschnitt als der Heizwendel 114b des zweiten Heizbereichs 110b. Die elektrischen Anschlüsse 113 für den ersten und den zweiten Heizwendel 114a, 114b befinden wie im ersten Ausführungsbeispiel auch auf der linken Stirnseite der Heizpatrone.

## Patentansprüche

1. Vorrichtung zum Zubereiten frisch gebrühter Heißgetränke, mit mindestens einem Heißwassererzeuger (10) und mit einer Brühvorrichtung (50), der Heißwasser aus dem Heißwassererzeuger (10) zuführbar ist, wobei es sich bei dem Heißwassererzeuger (10) um einen Durchlauferhitzer handelt, mit einer Steuerung (60) zur Ansteuerung des Durchlauferhitzers (10), die derart ausgebildet ist, dass der Durchlauferhitzer (10) zum Bezug einer vorgegebenen Heißwassermenge angeschaltet, und bereits kurz vor vollständiger Ausgabe der Heißwassermenge abgeschaltet wird, so dass die Temperatur (122) des Heißwassers am Ausgang des Durchlauferhitzers (10) zum Bezugsende rückläufig ist, **dadurch gekennzeichnet, dass** die Vorrichtung ein in Durchflussrichtung hinter dem Durchlauferhitzer (10) angeordnetes Drainageventil (16) umfasst, über das durch den Durchlauferhitzer (10) strömendes Wasser statt in Richtung der Brühvorrichtung (50) direkt in eine Abwasserleitung oder einen Abwassersammelbehälter geleitet werden kann, und dass die Steuerung ausgebildet ist, ein Wegeventil (15b) zwischen Durchlauferhitzer (10) und Brühvorrichtung (50) nach Ende eines Heißwasserbezugs zu schließen, das Drainageventil (16) zu öffnen, und bei ausgeschaltetem Durchlauferhitzer (10) nochmals einen Wasserfluss durch den Durchlauferhitzer (10) zu aktivieren, um den Durchlauferhitzer (10) zu kühlen.

2. Vorrichtung nach Anspruch 1, bei dem die Steuerung (60) ausgebildet ist, das Drainageventil (16) während einer Aufwärmphase (126, 126') des Durchlauferhitzers (10) zu öffnen und das vom Durchlauferhitzer (10) kommende Wasser in die Abwasserleitung oder den Abwassersammelbehälter zu leiten.

3. Vorrichtung nach Anspruch 2, bei der die Aufwärmphase bei jedem Bezug eines Heißgetränks ausgeführt wird.

4. Vorrichtung nach einem der vorangehenden Ansprüche, bei der die Steuerung (60) derart programmiert ist, dass das Abschalten der Heizung (114) erfolgt, nachdem zwischen 85% und 95% der vorgegebenen Heißwassermenge durch den Durchlauferhitzer (10) geströmt sind.

5. Vorrichtung nach einem der vorangehenden Ansprüche, bei dem der Durchlauferhitzer (10) einen zylindrischen Innenkörper (102) und einen diesen umgebenden äußeren Mantel (108) aufweist und bei dem zwischen der Mantelfläche (104) des Innenkörpers (102) und der Innenseite des Mantels (108) ein wendelförmig verlaufender Strömungskanal (106) für zu erhitzendes Wasser ausgebildet ist.

6. Vorrichtung nach Anspruch 5, mit einer elektrischen Heizung (114), welche als Heizwiderstand ausgebildet ist, der innerhalb des zylindrischen Innenkörpers (102) wendelförmig um dessen Mittelachse verläuft.

7. Vorrichtung nach einem der vorangehenden Ansprüche, welche eine Wasserpumpe (11) aufweist, die Wasser aus einer Zuleitung (30) zu dem Durchlauferhitzer (10) fördert.

8. Verfahren zum Zubereiten frisch gebrühter Heißgetränke, bei dem mittels eines Durchlauferhitzers (10) Heißwasser erzeugt und einer Brühvorrichtung (50) zugeleitet wird, wobei der Durchlauferhitzer (10) zum Bezug einer vorgegebenen Heißwassermenge angeschaltet wird und bereits kurz vor vollständiger Ausgabe der Heißwassermenge abgeschaltet wird, so dass die Temperatur (122) des Heißwassers am Ausgang des Durchlauferhitzers (10) zum Bezugsende bereits rückläufig ist, **dadurch gekennzeichnet, dass** nach Ende eines Heißwasserbezugs bei ausgeschaltetem Durchlauferhitzer (10) nochmals ein Wasserfluss durch den Durchlauferhitzer aktiviert wird, um den Durchlauferhitzer zu kühlen und das Wasser hierbei über ein Drainageventil (16) statt in Richtung der Brühvorrichtung (50) direkt in eine Abwasserleitung oder einen Abwassersammelbehälter geleitet wird.

9. Verfahren nach Anspruch 8, bei dem während einer Aufwärmphase (126, 126') des Durchlauferhitzers (10) das durch den Durchlauferhitzer (10) strömendes Wasser über ein Drainageventil (16) statt in Richtung der Brühvorrichtung (50) direkt in eine Abwasserleitung oder einen Abwassersammelbehälter geleitet wird.

## Claims

1. Device for preparing freshly brewed hot beverages, having at least one hot water generator (10) and having a brewing device (50) which is suppliable with hot water from the hot water generator (10), the hot water generator (10) being a continuous flow heater, having a controller (60) for actuating the continuous flow heater (10), which controller is configured in such a way that the continuous flow heater (10) is switched on for drawing a preset quantity of hot water and is switched off shortly before the quantity of hot water has been fully dispensed so that the temperature (122) of the hot water at the outlet of the continuous flow heater (10) decreases towards the end of the drawing operation,
**characterised in that**
the device comprises a drainage valve (16) which is arranged downstream of the continuous flow heater (10) in the throughflow direction and via which water flowing through the continuous flow heater (10), instead of being conducted in the direction of the brewing device (50), can be conducted directly into a wastewater line or a wastewater collection container, and
the controller is configured to close a directional control valve (15b) between the continuous flow heater (10) and the brewing device (50) after the end of a hot water drawing operation, to open the drainage valve (16) and, when the continuous flow heater (10) is switched off, to activate a flow of water through the continuous flow heater (10) again in order to cool the continuous flow heater (10).

2. Device according to claim 1, wherein the controller (60) is configured to open the drainage valve (16) during a heating-up phase (126, 126') of the continuous flow heater (10) and to conduct the water coming from the continuous flow heater (10) into the wastewater line or the wastewater collection container.

3. Device according to claim 2, wherein the heating-up phase is carried out for each drawing operation of a hot beverage.

4. Device according to any one of the preceding claims, wherein the controller (60) is programmed in such a way that the heater (114) is switched off after between 85 % and 95 % of the preset quantity of hot water have passed through the continuous flow heater (10).

5. Device according to any one of the preceding claims, wherein the continuous flow heater (10) has a cylindrical inner body (102) and an outer casing (108) surrounding the latter and wherein between the lateral surface (104) of the inner body (102) and the inner side of the casing (108) there is formed a helically extending flow channel (106) for water to be heated.

6. Device according to claim 5, having an electric heater (114) which is in the form of a heater resistor which, inside the cylindrical inner body (102), runs helically around the centre axis thereof.

7. Device according to any one of the preceding claims, which has a water pump (11) which feeds water from a supply line (30) to the continuous flow heater (10).

8. Method for preparing freshly brewed hot beverages, wherein hot water is generated by means of a continuous flow heater (10) and is supplied to a brewing device (50), wherein the continuous flow heater (10) is switched on for drawing a preset quantity of hot water and is switched off shortly before the quantity of hot water has been fully dispensed so that the temperature (122) of the hot water at the outlet of the continuous flow heater (10) decreases towards the end of the drawing operation,
**characterised in that**
after the end of a hot water drawing operation, when the continuous flow heater (10) is switched off, a flow of water through the continuous flow heater is activated again in order to cool the continuous flow heater, and the water, instead of being conducted in the direction of the brewing device (50), is conducted via a drainage valve (16) directly into a wastewater line or a wastewater collection container.

9. Method according to claim 8, wherein during a heating-up phase (126, 126') of the continuous flow heater (10), the water flowing through the continuous flow heater (10), instead of being conducted in the direction of the brewing device (50), is conducted via a drainage valve (16) directly into a wastewater line or a wastewater collection container.

## Revendications

1. Dispositif de préparation de boissons chaudes fraîchement infusées, avec au moins un générateur d'eau chaude (10) et avec un dispositif d'infusion (50) auquel de l'eau chaude provenant du générateur d'eau chaude (10) peut être amenée, le générateur d'eau chaude (10) étant un chauffe-eau instantané, avec un dispositif de commande (60) pour la commande du chauffe-eau instantané (10), qui est conçu de telle sorte que le chauffe-eau instantané (10) est mis en marche pour prélever une quantité prédéfinie d'eau chaude et est arrêté peu avant que la quantité d'eau chaude complète ait été délivrée, de telle sorte que la température (122) de l'eau chaude à la sortie du chauffe-eau instantané (10) diminue vers la fin du prélèvement,
**caractérisé en ce**
**que** le dispositif comprend une vanne de drainage (16) disposée en aval du chauffe-eau instantané (10) dans le sens d'écoulement, par laquelle l'eau qui traverse le chauffe-eau instantané (10) peut être dirigée directement dans une conduite d'eaux usées ou un récipient collecteur d'eaux usées au lieu d'être dirigée vers le dispositif d'infusion (50), et que
le dispositif de commande est conçu pour fermer un distributeur (15b) entre le chauffe-eau instantané (10) et le dispositif d'infusion (50) à la fin d'un prélèvement d'eau chaude, pour ouvrir la vanne de drainage (16) et, lorsque le chauffe-eau instantané (10) est arrêté, pour activer à nouveau un flux d'eau à travers le chauffe-eau instantané (10) afin de refroidir le chauffe-eau instantané (10).

2. Dispositif selon la revendication 1, dans lequel le dispositif de commande (60) est conçu pour ouvrir la vanne de drainage (16) pendant une phase de montée en température (126, 126') du chauffe-eau instantané (10) et pour diriger l'eau provenant du chauffe-eau instantané (10) dans la conduite d'eaux usées ou le récipient collecteur d'eaux usées.

3. Dispositif selon la revendication 2, dans lequel la phase de montée en température est effectuée à chaque prélèvement d'une boisson chaude.

4. Dispositif selon l'une des revendications précédentes, dans lequel le dispositif de commande (60) est programmé de telle sorte que le chauffage (114) est arrêté après que 85 % à 95 % de la quantité d'eau chaude prédéfinie a traversé le chauffe-eau instantané (10).

5. Dispositif selon l'une des revendications précédentes, dans lequel le chauffe-eau instantané (10) présente un corps intérieur cylindrique (102) et une enveloppe extérieure (108) entourant ce dernier, et dans lequel un canal d'écoulement (106) s'étendant en spirale pour l'eau à chauffer est formé entre la surface extérieure (104) du corps intérieur (102) et le côté intérieur de l'enveloppe (108).

6. Dispositif selon la revendication 5, comportant un chauffage électrique (114) qui est réalisé sous la forme d'une résistance chauffante qui s'étend en spirale autour de l'axe central du corps intérieur cylindrique (102) à l'intérieur de ce dernier.

7. Dispositif selon l'une des revendications précédentes, lequel présente une pompe à eau (11) qui transporte de l'eau provenant d'une conduite d'alimentation (30) vers le chauffe-eau instantané (10).

8. Procédé de préparation de boissons chaudes fraîchement infusées, dans lequel de l'eau chaude est produite au moyen d'un chauffe-eau instantané (10) et amenée à un dispositif d'infusion (50), le chauffe-eau instantané (10) étant mis en marche pour prélever une quantité d'eau chaude prédéfinie et étant arrêté peu avant que la quantité d'eau chaude complète ait été délivrée, de telle sorte que la température (122) de l'eau chaude à la sortie du chauffe-eau instantané (10) diminue déjà vers la fin du prélèvement,
**caractérisé en ce**
**qu'**à la fin d'un prélèvement d'eau chaude, lorsque le chauffe-eau instantané (10) est arrêté, un flux d'eau à travers le chauffe-eau instantané est à nouveau activé afin de refroidir le chauffe-eau instantané, et l'eau est alors dirigée par une vanne de drainage (16) directement dans une conduite d'eaux usées ou un récipient collecteur d'eaux usées au lieu d'être dirigée vers le dispositif d'infusion (50).

9. Procédé selon la revendication 8, dans lequel, pendant une phase de montée en température (126, 126') du chauffe-eau instantané (10), l'eau qui traverse le chauffe-eau instantané (10) est dirigée, par une vanne de drainage (16), directement dans une conduite d'eaux usées ou un récipient collecteur d'eaux usées au lieu d'être dirigée vers le dispositif d'infusion (50).
